# EUROPÄISCHE PATENTSCHRIFT

(11) **EP 2 107 084 B1**
(45) Veröffentlichungstag und Bekanntmachung des Hinweises auf die Patenterteilung: **01.12.2010**
(21) Anmeldenummer: 08154092.4
(22) Anmeldetag: 04.04.2008
(51) Int. Cl.: C08L 77/06, C08L 69/00, C08L 67/02

(54) **Additiv-Zusammensetzung für thermoplastische Formmassen**
Additive compound for thermoplastic moulded substances
Composition d'additif pour masses de moulage thermoplastiques

(43) Veröffentlichungstag der Anmeldung: 07.10.2009
(73) Patentinhaber: EMS-PATENT AG, 7013 Domat/Ems (CH)
(72) Erfinder: Elsässer, Hartmut, Dr., 64572 Büttelborn (DE); Schwitzer, Alwin, Dr., 8180 Bülach (CH); Pfleghar, Mark, 7013 Domat/Ems (CH); Presenz, Ulrich, Dr., 7014 Trin (CH)
(74) Vertreter: OK pat AG

(56) Entgegenhaltungen:
- US-A- 4 957 980
- US-A- 4 960 836
- US-A- 5 258 233
- US-A1- 2006 199 921
- US-B1- 7 005 481
- DATABASE WPI Week 199027 Thomson Scientific, London, GB; AN 1990-204919 XP002491355 & JP 02 135259 A (TOYOBO KK) 24. Mai 1990 (1990-05-24)
- DATABASE WPI Week 200425 Thomson Scientific, London, GB; AN 2004-260251 XP002491356 & JP 2003 327805 A (TOYOBO KK) 19. November 2003 (2003-11-19)

## Beschreibung

Die Erfindung betrifft Additiv-Zusammensetzungen zum Beimischen zu Polyester oder Polycarbonat sowie thermoplastische Formmassen mit einer solchen Additiv-Zusammensetzung.

Polyester oder Polycarbonat Formmassen werden seit langem in technischen Anwendungen und zur Herstellung von Verpackungsartikeln verwendet. Weit verbreitet ist beispielsweise die Herstellung von Lebensmittelverpackungen, wie zum Beispiel Behälter oder Folien. Getränkeflaschen aus Polyester oder Polycarbonat werden in grossen Zahlen zum Abfüllen von kohlensäurehaltigen Getränken (Süssgetränken) und von mit oder ohne Kohlensäure versetztem Mineralwasser verwendet. In zunehmendem Masse werden solche Kunststoffflaschen auch zum Abfüllen von alkoholhaltigen Getränken, wie beispielsweise Bier in Betracht gezogen. Die Flaschen sind vorwiegend farblos, grün, blau, braun oder bernsteinfarben.

Andere Verwendungen von Polyester oder Polycarbonat Formmassen, insbesondere Polyethylenterephthalat (PET), betreffen die Herstellung von Verpackungen für Chemikalien, unter anderem auch für die Landwirtschaft, sowie Verpackungen für Kosmetika, Reinigungsmittel, Farben, Lacke und dergleichen mehr.

Wie allgemein bekannt, werden PET-Flaschen in einem Zweistufenverfahren hergestellt. In der ersten Stufe wird PET-Granulat (zusammen mit allfälligen Additiven) aufgeschmolzen und sogenannte Vorformlinge oder Preforms werden in einem Spritzgussverfahren hergestellt. Diese Preforms werden (möglicherweise in einem anderen Betrieb) in einem zweiten Verfahrensschritt zur endgültigen Flaschenform aufgeblasen. Dieser zweite Verfahrensschritt wird in einer Blasform durchgeführt, wobei die Preforms gleichzeitig in der Längsachse gestreckt werden können. Es gibt aber auch die Möglichkeit beide Schritte in einer Maschine durchzuführen.

Laut dem Dokument JP 2003-165901 soll eine Polyesterverbindung mit ausgezeichneter Kontrollierbarkeit der Kristallisation beim Schmelzformen und mit lang anhaltender Formbarkeit vorgeschlagen werden. Zudem sollen entsprechende Formteile, wie z.B. ein hohler Formkörper, eine Platte und ein gestreckter Film mit ausgezeichneter Transparenz und dreidimensionaler Wärmestabilität bereitgestellt werden. Die gestellte Aufgabe wird dadurch erfüllt, dass die Polyester-Chips mit Ethylenterephthalat als hauptsächlicher Wiederholungseinheit umfassen, denen 0.1 ppb bis 50'000 ppm an Polymeren beigemischt sind, die ausgewählt sind aus Polyolefinen, Polyamiden, Polyacetalen und Polybutylenterephthalat. Die Polyesterzusammensetzung enthält auch Phosphorverbindungen.

Laut dem Dokument JP 2003-327805 soll eine Polyesterverbindung mit ausgezeichneter Hitzeresistenz und Transparenz sowie hervorragenden mechanischen Eigenschaften vorgeschlagen werden. Wobei die Polyesterverbindung einen möglichst geringen Acetaldehydgehalt und ausgezeichnete Langzeitformbarkeit bei der thermoplastischen Herstellung von geformten und blasgeformten Produkten sowie Filmen aufweisen soll. Die gestellte Aufgabe wird dadurch erfüllt, dass die Polyesterverbindung (A) einen aromatischen Polyester mit einer hauptsächlichen Wiederholungseinheit umfasst, welche aus einer aromatischen Dicarbonsäurenkomponente und einer Glykolkomponente gebildet ist; (B) eine Verbindung umfasst, die auf einem organischen Calciumsalz basiert; und (C) 0.01 bis 5 Gew.-% eines Polyamidharzes umfasst, das Metaxylylengruppen aufweist.

Um die Barrierewirkung von Polyethylenterephthalat zu verbessern wird von Mitsubishi Gas Chemical (siehe Internet-Homepage www.mgc.co.jp/eng/products/nop) das Abmischen von Polyethylenterephthalat und PA MXD6 empfohlen. Die Anwendungsmöglichkeiten dieser Mischungen sind aber begrenzt, da die Verbesserung der Barriere zu einem Ansteigen des Haze (Trübung) und einer Verringerung der Lichttransmission führt.

Bei den im Markt als Polyethylenterephthalat (PET) angebotenen Produkten handelt es sich oft um Copolyester, welche neben Terephthalsäure und Ethylenglykol weitere Dicarbonsäuren, z.B. Isophthalsäure oder Diole, z.B. Butandiol enthalten. Der Begriff Polyethylenterephthalat (PET) umfasst daher in dieser Anmeldung auch polyethylenterephthalathaltige Copolyester.

Die Aufgabe der vorliegenden Erfindung bestand darin, eine Additiv-Zusammensetzung zum Beimischen zu Polyester oder Polycarbonat vorzuschlagen, mit welcher Formkörper, wie zum Beispiel Behälter, Folien oder Rohre, hergestellt werden können, die, bei gleichzeitig gutem Haze und guter Lichttransmission, eine erhöhte Barrierewirkung für Sauerstoff und/oder Kohlendioxid aufweisen.

Überraschend wurde gefunden, dass diese Aufgabe durch die Zumischung eines opaken Copolymers Polyamid-co-Polycarbonat gelöst wird.

Die in dieser Anmeldung verwendete Schreibweise mit "-co-" bedeutet, das ein Copolymer der angegeben Einheiten vorliegt.

Erfindungsgemäss wird diese Aufgabe gemäss den Merkmalen des Anspruchs 1 dadurch gelöst, dass eine Additiv-Zusammensetzung zum Beimischen zu Polyester oder Polycarbonat vorgeschlagen wird, die dadurch gekennzeichnet ist, dass die Additiv-Zusammensetzung zumindest umfasst:
a) ein MXD-Polyamid, und
b) ein Copolymer Polyamid-co-Polycarbonat,
   wobei sich die Additiv-Komponenten zu 100 Gew.-% der Additiv-Zusammensetzung summieren.

Thermoplastische Formmassen mit einer solchen Additiv-Zusammensetzung in Mengen von 1 bis 13 Gew.-% bezogen auf die gesamte Formmasse basierend auf Polyester oder Polycarbonat sowie erfindungsgemässe Verwendungen der Additiv-Zusammensetzung bzw. der thermoplastischen Formmassen, sowie weitere erfinderische Merkmale und bevorzugte Ausführungsformen der Erfindung ergeben sich aus den abhängigen Ansprüchen.

Als Basis der thermoplastischen Formmassen werden Polyester oder Polycarbonat verwendet. Polyester oder Polycarbonat werden im Folgenden daher auch als Basisgranulat bezeichnet.

Die Additiv-Zusammensetzung wird erfindungsgemäss zum Herstellen einer thermoplastischen Formmasse basierend auf Polyester oder Polycarbonat verwendet.

Die thermoplastische Formmasse wird erfindungsgemäss zur Herstellung ein- oder mehrschichtiger Formkörper verwendet. Bei mehrschichtigem Aufbau des Formkörpers enthält mindestens eine der Schichten die erfindungsgemässe Additiv-Zusammensetzung. Hervorgerufen durch eine oder mehrere der zusätzlichen Schichten kann der Formkörper bei mehrschichtigem Aufbau undurchsichtig sein. Bei den ein- oder mehrschichtigen Formkörpern kann es sich zum Beispiel um Behälter, Folien oder Rohre handeln.

Die Behälter können durch Spritzstreckblasen, Spritzblasen oder Extrusionsblasformen ein- oder mehrschichtig hergestellt werden. Behälter sind zum Beispiel Dosen, Fässer, Flaschen, Gefässe, Kanister oder Schachteln.

Die Folien können als Flachfolien (auch Giessfolien genannt) oder Blasfolien ein- oder mehrschichtig hergestellt werden.

Die Rohre werden durch Rohrextrusion ein- oder mehrschichtig, jeweils glatt oder gewellt hergestellt.

Zu den Anforderungen an die, die erfindungsgemässe Additiv-Zusammensetzung enthaltenden Formkörper bzw. an die verkaufsfähigen Produkte zählt eine gegenüber Formkörpern aus Polyethylenterephthalat oder Polycarbonat ohne erfindungsgemässe Additiv-Zusammensetzung verbesserte Barrierewirkung gegenüber Sauerstoff und/oder Kohlendioxid. Dabei darf der Haze dieser Formkörper (gemessen an ungefärbten Platten mit einer Dicke von 1 mm) maximal 7.5 %, bevorzugt maximal 6.5 %, besonders bevorzugt maximal 5 % betragen. Daraus ergeben sich als Hauptanforderungen an die, die erfindungsgemässe Additiv-Zusammensetzung enthaltenden Formkörper eine verbesserte Barrierewirkung gegenüber Sauerstoff und/oder Kohlendioxid sowie eine Obergrenze des Hazes.

Der Haze gehört zu den Hauptanforderungen, da Änderungen des Haze-Werts vom Endverbraucher visuell leicht feststellbar sind.

Als Nebenanforderung an die, die erfindungsgemässe Additiv-Zusammensetzung enthaltenden Formkörper bzw. an die verkaufsfähigen Produkte kann auch die Lichttransmission von Interesse sein. Gemessen an ungefärbten Platten mit einer Dicke von 1 mm, soll sie mindestens 87 %, bevorzugt mindestens 88.5 %, besonders bevorzugt mindestens 89 % betragen.

Unter MXD-Polyamiden sind Polyamide zu verstehen, die als Monomer Metaxylylendiamin (MXD) enthalten. Die relative Viskosität (gemessen in 0.5 Gew.-%-iger m-Kresollösung bei 20 °C) der MXD-Polyamide beträgt mindestens 1.50, bevorzugt mindestens 1.55, besonders bevorzugt 1.60 bis 1.80, ganz besonders bevorzugt 1.63 bis 1.75.

Bevorzugt wird eine derartige Additiv-Zusammensetzung, bei welcher das MXD-Polyamid in der Additiv-Zusammensetzung MXD6/MXDZ ist, wobei Z eine aromatische Dicarbonsäure ist. Die aromatische Dicarbonsäure ist in Mengen von 0 bis 8 Mol-%, bevorzugt in Mengen von 1 bis 7 Mol-%, besonders bevorzugt in Mengen von 2 bis 4 Mol-% im MXD-Polyamid enthalten. Die aromatische Dicarbonsäure ist ausgewählt aus der Gruppe bestehend aus Isophthalsäure, Terephthalsäure, Naphthalindicarbonsäure und Mischungen davon.

Das erfindungsgemäss eingesetzte Copolymer Polyamid-co-Polycarbonat (PA-co-PC) hat bevorzugt die Zusammensetzung 70/30 bis 30/70 Gew.-%, besonders bevorzugt die Zusammensetzung 50/50 Gew.-%. Die relative Viskosität (gemessen in 0.5 Gew.-%-iger m-Kresollösung bei 20 °C) beträgt mindestens 1.35, bevorzugt mindestens 1.40, besonders bevorzugt 1.40 bis 1.75, ganz besonders bevorzugt 1.45 bis 1.65. Sowohl das Granulat, als auch Platten mit einer Dicke von 1 mm und weniger sind opak.

Die Additiv-Zusammensetzung enthält vorzugsweise ein Metallphosphonat, wobei das Metall des Metallphosphonats bevorzugt ausgewählt ist aus der Gruppe bestehend aus Natrium, Kalium, Magnesium, Calcium, Aluminium, Kobalt und Zink. Speziell bevorzugt wird, dass das Metallphosphonat in der Additiv-Zusammensetzung Calcium-diethyl-bis[[3,5-bis(1-dimethylethyl)-4-hydroxyphenyl]methyl]phosphonat ist.

Die Additiv-Zusammensetzung kann weitere Zusatzstoffe enthalten. Solche Zusatzstoffe sind bevorzugt ausgewählt aus einer Gruppe, die aus Hitzestabilisatoren, Lichtstabilisatoren, UV-Stabilisatoren, UV-Absorbern, UV-Blockern, Antioxidantien, Nukleierungsmitteln, Kristallisationsbeschleunigern, Kristallisationsverzögeren, Entformungsmitteln, Gleitmitteln, Pigmenten, Farbstoffen, Kobaltverbindungen, Antiblockmitteln, optischen Aufhellern, natürlichen Schichtsilikaten, synthetischen Schichtsilikaten und Polyamid 6I/6T besteht.

Diese weiteren Zusatzstoffe werden der Additiv-Zusammensetzung vorzugsweise in Form von einem oder mehreren Masterbatches mit einem Träger zugegeben, wobei der Träger ausgewählt ist aus einer Gruppe, die aus Polyamid, Polyester und Polycarbonat besteht und vorzugsweise Polyamid ist.

Thermoplastischen Formmassen auf der Basis von Polyester oder Polycarbonat wird eine erfindungsgemässe Additiv-Zusammensetzung zugesetzt. Dabei wird die Additiv-Zusammensetzung dem Polyester oder Polycarbonat in Mengen von 1 bis 13 Gew.-%, bevorzugt in Mengen von 1 bis 10 Gew.-%, besonders bevorzugt in Mengen von 2 bis 8 Gew.-% und speziell bevorzugt in Mengen von 3 bis 6.5 Gew.-% bezogen auf die gesamte thermoplastische Formmasse zugegeben.

Ganz speziell bevorzugt wird die Additiv-Zusammensetzung Polyethylenterephthalat (PET) oder Polybutylenterephthalat (PBT) zugesetzt.

Zur Herstellung der erfindungsgemässen Additiv-Zusammensetzung müssen die Komponenten getrocknet werden: Die MXD-Polyamid-Granulate und das Basis-Granulat werden bei 100 - 130 °C während 12 - 60 Stunden im Vakuum getrocknet. Das Polyamid-co-Polycarbonat-Granulat wird bei 70 - 95 °C während 12 - 60 Stunden im Vakuum getrocknet. Die Trocknung muss in einer Art und Weise erfolgen, dass die Granulatfeuchte danach maximal 0.02 Gew.-% beträgt. Die maximale Feuchte des Metallphosphonats darf 0.1 Gew.-% betragen; andernfalls wird es bei 70 - 95 °C im Vakuum getrocknet.

Die Additiv-Zusammensetzung kann als Dryblend oder Compound vorliegen. Zur Dryblendherstellung werden die getrockneten Granulate und gegebenenfalls das Metallphosphonat, das bevorzugt in Pulverform vorliegt und/oder gegebenenfalls weitere Zusatzstoffe vermischt. Diese Mischung wird mittels eines Taumelmischers, Röhnradmischers oder Taumeltrockners 10 - 40 Minuten lang homogenisiert. Zur Vermeidung der Feuchtigkeitsaufnahme kann dies unter getrocknetem Schutzgas erfolgen.

Das homogenisierte Dryblend der Additiv-Zusammensetzung kann auch vor der Verwendung in einem Ein- oder Zweiwellenextruder oder in einem Kneter bei 265 bis 290 °C in schmelzeförmigem Zustand gemischt und anschliessend zu Granulat geformt werden. Das Granulat muss danach auf eine maximale Feuchte von 0.02 Gew.-% getrocknet werden.

Nach dem erfindungsgemässen Verfahren kann die Additiv-Zusammensetzung dem Polyester oder Polycarbonat vor der Verarbeitung als Dryblend oder Compound zugesetzt werden oder sie kann dem Polyester oder Polycarbonat ebenfalls vor der Verarbeitung in einem separaten Extrusionsschritt zugegeben werden. Diese Extrusion kann zum Beispiel in einem Ein- oder Zweiwellenextruder oder in einem Kneter bei 265 - 290 °C erfolgen.

Die Additiv-Zusammensetzung kann dem Polyester oder Polycarbonat auch bei der Verarbeitung in Form ihrer einzelnen getrockneten Komponenten direkt an der Verarbeitungsmaschine zugesetzt werden.

Aus Kostengründen wird die Additiv-Zusammensetzung bevorzugt als Dryblend verwendet und ebenfalls aus Kostengründen dem Polyester oder Polycarbonat bevorzugt direkt beim Verarbeiten zugegeben.

Die Verarbeitung der die Additiv-Zusammensetzung enthaltenden Formmassen erfolgt bei den für den Polyester oder das Polycarbonat üblichen Verarbeitungstemperaturen.

Die Additiv-Zusammensetzung enthält:
65 - 91 Gew.-%, bevorzugt 70 - 91 Gew.-%, besonders bevorzugt 77 - 91 Gew.-% MXD-Polyamid,
9 - 24 Gew.-%, bevorzugt 9 - 21 Gew.-%, besonders bevorzugt 9 - 17 Gew.-% Copolymer Polyamid-co-Polycarbonat,
0 - 8 Gew.-%, bevorzugt 0.1 - 6 Gew.-%, besonders bevorzugt 0.5 - 4 Gew.-% Metallphosphonat, und
0 - 3 Gew.-%, bevorzugt 0 - 2 Gew.-%, besonders bevorzugt 0 - 1.5 Gew.-% weitere Zusätze.

In einer speziellen Ausführungsform der Erfindung stehen die Komponenten der Additiv-Zusammensetzung in folgendem gewichtsmässigen Verhältnis zueinander:
MXD-Polyamid : Polyamid-co-Polycarbonat : Metallphosphonat = 100 : 20 : 4.
Im Folgenden wird die Herstellung und Prüfung der Prüfkörper zum Testen der erfindungsgemässen Additiv-Zusammensetzungen und zum Vergleichen mit aus dem Stand der Technik bekannten Formmassen beschrieben. Die erfindungsgemässe Additiv-Zusammensetzung enthält dabei zumindest ein MXD-Polyamid, und ein Copolymer Polyamid-co-Polycarbonat und gegebenenfalls noch ein Calciumphosphonat.

### A) Trocknung

Die MXD-Polyamid-Granulate (PA MXD6, PA MXD6/MXDI) und das Basis-Granulat (PET) werden bei 120 °C während 48 Stunden im Vakuum getrocknet. Das Polyamid-co-Polycarbonat-Granulat wird bei 80 °C während 48 Stunden im Vakuum getrocknet. Der Feuchtegehalt der Granulate liegt dann jeweils unter 0.02 Gew.-%. Der Feuchtegehalt des Calciumphosphonates liegt schon bei Anlieferung unter 0.1 Gew.-%, dieses muss daher nicht mehr getrocknet werden.

### B) Dryblendherstellung

Das MXD-Polyamid-Granulat (PA MXD6 oder PA MXD6/MXDI), das Basis-Granulat (PET) und gegebenenfalls das Calciumphosphonat werden zu einem Dryblend vermischt. Diese Mischung wird mittels eines Taumelmischers ca. 20 Minuten lang homogenisiert.

### C) Plattenherstellung

Die ungefärbten Platten weisen eine Dimension von 100 x 100 x 1 mm auf. Das homogenisierte Dryblend wird mit einer Spritzgussmaschine der Firma Arburg, Modell Allrounder 420 C 1000-250 mit Heisskanal, zu Platten mit zentralem Punktanguss verarbeitet. Dabei wird ein von 265 bis 280 °C (Einzug zur Düse) ansteigendes Zylindertemperaturprofil, eine Heisskanaltemperatur von 303°C und eine Schneckendrehzahl von 25 U/min eingestellt. Die Werkzeugtemperatur beträgt 11 °C.

### D) Flaschenherstellung

Es werden einschichtige, ungefärbte Flaschen mit 0.5 l Inhalt hergestellt. Die Preformgeometrie ist eine Standardgrösse für 0.5-Literflaschen mit 28 mm PCO-Gewinde (Standard für PET-Flaschen) und einem Gewicht von 26.5 Gramm. Die Preformlänge beträgt 100.5 mm. Das homogenisierte Dryblend wird auf einer Spritzgussanlage der Firma Netstal, Modell Synergy 1000 mit einem 2-Kavitäten-Werkzeug zu obigen Preforms verarbeitet, dabei betragen die:

| | |
|---|---|
| Zylindertemperatur: | Z1 = 275 °C; Z2 bis Z4 = 280 °C |
| Düse-Spritzaggregattemperatur: | 285 °C |
| Heisskanaltemperatur: | 280 °C |
| Düsentemperatur: | 290 °C |
| Schneckendrehzahl: | 150/min |
| Werkzeugtemperatur: | 13 °C |

Diese Preforms werden auf einer Blasformmaschine der Firma Alpla, Modell Soplar ALS 1-4 streckgeblasen. Die Preforms werden unter Rotation im Infrarot-Ofen mit folgendem Heizprofil erwärmt:

**Tabelle 1**

| Heizzonen am Preform | Anlagenzone | Heizstellgrad |
|---|---|---|
| Boden | Z6 | 30% |
| Körper Unten | Z5 | 50% |
| Körper Mitte | Z4 | 60% |
| Körper Oben | Z3 | 70% |
| Unterer Halsbereich | Z2 | 60% |
| Oberer Halsbereich | Z1 | 30% |

| | |
|---|---|
| Dabei betragen: | |
| Gesamtofenstellgrad (Heizleistung): | 70 % |
| Preformtemperatur: | 109 °C |
| Werkzeugtemperatur: | 13 °C |
| Streckverhältnis (längs, Flaschenhöhe): | 2.2 |
| Aufblasverhältnis (quer, Flaschenbreite): | 2.8 |
| Gesamtstreckverhältnis der Flasche: | 6.16 |
| Zykluszeit: | 2.8 s |
| Vorblaszeit: | 0.4 s |
| Blaszeit: | 1.7s |
| Vorblasdruck: | 5 bar |
| Blasdruck: | 38 bar. |

### E) Testparameter

Die relative Viskosität wird nach ISO 307 in 0.5 Gew.-%-iger m-Kresollösung bei einer Temperatur von 20 °C gemessen. Die Berechnung der relativen Viskosität (RV) erfolgt nach RV = t/t₀ in Anlehnung an Abschnitt 11 der Norm.

Der Schmelzpunkt des Granulats wird nach ISO-Norm 11357-1/-2 gemessen, wobei die Differential Scanning Calorimetry (DSC) mit einer Aufheizrate von 20 K/min durchgeführt wird. Als Schmelzpunkt wird die Temperatur am Peakmaximum angegeben.

Der Brechungsindex (Brechzahl) wird an ungefärbten Platten von 100 x 100 x 1 mm gemäss DIN 53491 bei einer Temperatur von 20 °C gemessen. Der Brechungsindex n_{D}²⁰ wird bei der Standardwellenlänge (gelbe D-Linie des Natriums) bei 20 °C gemessen.

Die Lichttransmission und der Haze werden gemäss ASTM D 1003 festgestellt. Dabei wird eine ungefärbte Platte von 100 x 100 x 1 mm oder ein Wandstück von 40 x 40 mm (Körper oben) der ungefärbten 0.5 I Flasche bei einer Temperatur von 23 °C geprüft. Verwendet wird ein Messgerät "Haze Gard plus" der Firma Byk Gardner mit CIE Lichtart C. Der Lichttransmissions- und der Hazewert werden in % der eingestrahlten Lichtmenge angegeben.

Die Sauerstoffbarrieremessung erfolgt gemäss ASTM D 3985-5 bei einer Temperatur von 23 °C und bei einer relativen Feuchte von 85%. Zur Messung des Wandstücks von 40 x 40 mm (Körper oben) der ungefärbten 0.5 I Flasche wird ein Messgerät Mocon OX-Tran 2/20 der Firma Mocon verwendet. Die Kalibrierung des Messgeräts wird mit einer Polyester Kalibrierfolie "Juliett" mit 0.95 mil (24.13 µm) Dicke der Firma Mocon durchgeführt. Die Messung erfolgt im Trägergasverfahren.

Die Kohlendioxydbarrieremessung erfolgt gemäss DIN 5338-4 bei einer Temperatur von 23 °C und bei einer relativen Feuchte von 85%. Zur Messung des Wandstücks von 40 x 40 mm (Körper oben) der ungefärbten 0.5 I Flasche wird ein Messgerät Mocon Permatran-C 4/41 der Firma Mocon verwendet. Die Kalibrierung des Messgeräts wird mit einer Polyester Kalibrierfolie mit 0.92 mil (23.368 µm) Dicke der Firma Mocon durchgeführt. Die Messung erfolgt im Trägergasverfahren.

### F) Testresultate

In der Tabelle 2 sind die in den Vergleichsbeispielen und Beispielen verwendeten Materialien aufgelistet und charakterisiert. Vergleichsbeispiele geben dabei Formmassen aus dem Stand der Technik wieder, wohingegen in den Beispielen erfindungsgemässe Formmassen verwendet werden. Als Polyethylenterephthalat wird das Standard PET - Eastman PET 9921W - der Firma Eastman verwendet.

**Tabelle 2**

| **Material** | **chem. Be-zeichnung** | **Z** | **RV** | **Tm** | **BI** | **Handels-Name** | **Hersteller** |
|---|---|---|---|---|---|---|---|
| PET | Polyethylenterephthalat | - | * | 240 | 1.5776 | Eastman PET 9921 W | Eastman (USA) |
| PA MXD6 | Metaxylylenadipamid | - | 1.71 | 237 | 1.5839 | MXD6 Typ 6007 | Mitsubishi Gas Chemical (Japan) |
| PA MXD6/ MXDI Nr. 2 | Metaxylylenadip amid-co-Metaxylylenisophthalat | 98 / 98 / 2 | 1.63 | 233 | 1.5866 | - | EMS-CHEMIE AG (Schweiz) |
| PA MXD6/ MXDI Nr. 6 | | 94 / 6 | 1.55 | 227 | - | - | EMS-CHEMIE AG (Schweiz) |
| PA MXD6/ MXDI Nr. 12 | | 88 / 12 | 1.60 | 218 | 1.5853 | - | EMS-CHEMIE AG (Schweiz) |
| PA-co-PC | Polyamid-co-Polycarbonat | 50 / 50 ** | 1.48 | 223 | *** | Brüggolen M1251 | Brüggemann Chemical (Deutschland) |
| Calcium-phospho-nat | Calcium-diethyl-bis[[3,5-bis(1,1-dimetylethyl)-4-hydroxy-phenyl]-methyl]-phosphonat | - | - | 312 | - | Irgamod 195 | CIBA Spezialitäten-Chemie (Schweiz) |

| | | | | | | | |
|---|---|---|---|---|---|---|---|
| Legende: * Inhärente Viskosität 0.80 gemessen in 0.5 Gew.-% Lösung Phenol /1,1,2,2-Tetrachlorethan 60/40 Gew.-% bei 25 °C ** Gew.-% *** opak, daher nicht messbar Z = Zusammensetzung [Mol-%]; RV = Relative Viskosität, gemessen in 0.5 Gew.-%-iger m-Kresollösung bei 20 °C; Tm = Schmelzpunkt [°C]; BI = Brechungsindex | | | | | | | |

Metaxylylenadipamid-co-Metaxylylenisophthalat bedeutet ein Copolyamid aus den Einheiten Metaxylylenadipamid und Metaxylylenisophthalat, also ein Copolyamid aus den Monomeren Metaxylylendiamin, Adipinsäure und Isophthalsäure.

Die Tabelle 3 zeigt den Einfluss des Anteils der aromatischen Dicarbonsäure im MXD-Polyamid auf die Transparenz und den Haze einer PET/MXD-Polyamid-Formmasse am Beispiel Isophthalsäure als aromatische Dicarbonsäure.

**Tabelle 3**

| | | **Vergleichsbeispiele** | | | |
|---|---|---|---|---|---|
| **Komponenten** | **Einheit** | **1** | **2** | **3** | **4** |
| PET | Gew.-% | 95 | 95 | 95 | 95 |
| PA MXD6 | Gew.-% | 5 | - | - | - |
| PA MXD6/MXDI Nr. 12 | Gew.-% | - | 5 | - | - |
| PA MXD6/MXDI Nr. 6 | Gew.-% | - | - | 5 | - |
| PA MXD6/MXDI Nr. 2 | Gew.-% | - | - | - | 5 |
| **Prüfungen** | | | | | |
| Lichttransmission, Platte | % | 86.7 | 86.0 | 87.5 | 88.0 |
| Haze, Platte | % | 9.0 | 9.3 | 8.2 | 7.8 |

Mit den Copolyamiden PA MXD6/MXDI Nr. 2 und Nr. 6 mit 2 bzw. 6 Mol-% Isophthalsäure werden beide Eigenschaften des Blends gegenüber der Verwendung von PA MXD6 als MXD-Polyamid verbessert, ohne aber die notwendigen Werte zu erreichen. Mit dem Copolyamid PA MXD6/MXDI Nr. 12 mit 12 Mol-% Isophthalsäure werden hingegen beide Eigenschaften des Blends gegenüber der Verwendung von PA MXD6 als MXD-Polyamid verschlechtert.

Die Tabelle 4 zeigt Vergleichsbeispiele zum Stand der Technik.

**Tabelle 4**

| | **Vergleichsbeispiele** | | | | | | | |
|---|---|---|---|---|---|---|---|---|
| **Komponenten** | **Einheit** | **5** | **6** | **7** | **8** | **9** | **10** | **11** |
| PET | Gew.-% | 100 | 95 | 92 | 94.984 | 94.99 | 95 | 92 |
| PA MXD6 | Gew.-% | - | 5 | 8 | - | - | - | - |
| PA MXD6/MXDI Nr. 2 | Gew.-% | - | - | - | 5 | 5 | 5 | 8 |
| Calciumphosphonat | Gew.-% | - | - | - | 0.016 | 0.01 | - | - |
| **Prüfungen** | | | | | | | | |
| Haze, Platte | % | 3.5 | 9.0 | 11.5 | 7.9 | 8.0 | 7.8 | 11.1 |
| Haze, Flasche | % | 1.7 | 28 | - | - | - | 24.4 | - |
| Lichttransmission, Platte | % | 90.1 | 86.7 | 84.2 | 87.9 | 88.1 | 88.0 | 87.1 |
| Lichttransmission, Flasche | % | 89.4 | 78.6 | - | - | - | 80.4 | - |
| Sauerstoffbarriere, Flasche | ccm/m² d bar | 4.9 | 3.3 | - | - | - | - | - |
| Kohlendioxidbarriere, Flasche | cm³/m² d bar | 15.7 | 9.6 | - | - | - | - | - |
| Dicke des Wandstückes | µm | 380-420 | 375-428 | - | - | - | 380-410 | - |

Das Vergleichsbeispiel 5 gibt die Messwerte an, die bei der Verwendung von PET allein erhalten werden. Die Vergleichsbeispiele 6 und 7 entsprechen der Empfehlung von Mitsubishi Gas in PA MXD6-Broschüren zur Verbesserung der Sauerstoffbarriere von PET. Das Vergleichsbeispiel 8 entspricht der Offenbarung von JP 2003-165901 und das Vergleichsbeispiel 9 entspricht der Offenbarung von JP 2003-327805.

Die Tabellen 5 und 6 zeigen die erfindungsgemässen Beispiele.

**Tabelle 5**

| | | **Beispiele** | | | | |
|---|---|---|---|---|---|---|
| **Komponenten** | **Einheit** | **12** | **13** | **14** | **15** | **16** |
| PET | Gew.-% | 94.5 | 94 | 95.14 | 93.8 | 93.8 |
| PA MXD6 | Gew.-% | - | - | - | - | 5 |
| PA MXD6/MXDI Nr. 2 | Gew.-% | 5 | 5 | 4 | 5 | - |
| PA-co-PC | Gew.-% | 0.5 | 1 | 0.8 | 1 | 1 |
| Calciumphosphonat | Gew.-% | - | - | 0.16 | 0.2 | 0.2 |
| **Prüfungen** | | | | | | |
| Haze, Platte | % | 7.2 | 6.3 | 2.8 | 3.4 | 4.1 |
| Haze, Flasche | % | - | 19.6 | - | 8.9 | - |
| Lichttransmission, Platte | % | 88.6 | 88.9 | 90.5 | 89.1 | 88.2 |
| Lichttransmission, Flasche | % | - | 81.2 | - | 84.1 | - |
| Sauerstoffbarriere, Flasche | cm³/m² d bar | - | - | - | 3.0 | - |
| Kohlendioxidbarriere, Flasche | cm³/m² d bar | - | - | - | 9.5 | - |
| Dicke des Wand-stückes | µm | - | 380-405 | - | 375-400 | - |

Der Vergleich der Beispiele 12 und 13 mit dem Vergleichsbeispiel 10 zeigt den positiven Einfluss des opaken Copolymers Polyamid-co-Polycarbonat (PA-co-PC) auf den Haze und die Lichttransmission. Beide Formmassen dieser Beispiele erfüllen die Hauptanforderung betreffend dem Haze (< 7.5 %) und auch die Nebenanforderung betreffend der Lichttransmission (> 87 %) gemessen an ungefärbten Platten und zeigen auch bessere Werte als die Formmasse von Vergleichsbeispiel 6. Durch Zugabe von Calciumphosphonat können die Werte noch weiter verbessert werden, wie die Formmassen der Beispiele 15, 17 und 18 zeigen. Die Formmasse aus Beispiel 15 zeigt einen deutlich tieferen Haze und eine deutlich höhere Lichttransmission als die Vergleichsbeispiele 8 und 9 welche kein PA-co-PC enthalten. Durch die Additivkombination PA-co-PC und Calciumphosphonat kann auch eine Mischung PET / PA MXD6 so ausgerüstet werden, das diese die Bedingungen an den Haze und die Lichttransmission erfüllt, wie in Beispiel 16 gezeigt wird.

**Tabelle 6**

| | | **Beispiele** | | | | |
|---|---|---|---|---|---|---|
| **Komponenten** | **Einheit** | **17** | **18** | **19** | **20** | **21** |
| PET | Gew.-% | 94.49 | 94.843 | 94.27 | 90.80 | 90.08 |
| PA MXD6 | Gew.-% | - | - | - | - | - |
| PA MXD6/MXDI Nr. 2 | Gew.-% | 5 | 5 | 5 | 8 | 8 |
| PA-co-PC | Gew.-% | 0,5 | 0,5 | 0.7 | 1.15 | 1.6 |
| Calciumphosphonat | Gew.-% | 0.01 | 0.025 | 0.03 | 0.25 | 0.32 |
| **Prüfungen** | | | | | | |
| Haze, Platte | % | 4.1 | 5.5 | 5.6 | 7.2 | 6.4 |
| Haze, Flasche | % | 10.4 | 14.9 | - | 19.6 | 17.0 |
| Lichttransmission, Platte | % | 89.3 | 89.0 | 88.9 | 88.3 | 88.8 |
| Lichttransmission, Flasche | % | 84.2 | 84.0 | - | 80.9 | 81.6 |
| Sauerstoffbarriere, Flasche | cm³/m² d bar | - | - | - | - | - |
| Kohlendioxidbarriere, Flasche | cm³/m² d bar | - | - | - | - | - |
| Dicke des Wandstückes | µm | 380-410 | 375-410 | - | 380-415 | 370-410 |

Auch bei Verwendung von 8 Gew.-% PA MXD6/MXDI Nr. 2 können durch Zusatz der Additiv-Zusammensetzung die Bedingungen an den Haze und die Lichttransmission erfüllt werden, was durch die Beispiele 20 und 21 belegt ist.

Die mit den erfindungsgemässen Formmassen der Beispiele 13, 15, 17, 18, 20 und 21 ereichten Werte für den Haze und die Lichttransmission gemessen an einem Wandstück der ungefärbten 0.5 I Flasche sind gegenüber den Werten der Formmassen der Vergleichsversuche 6 und 10 deutlich verbessert.

Beispiel 15 belegt auch die durch die erfindungsgemässen Formmassen erreichte Verbesserung der Sauerstoff- und Kohlendioxidbarriere im Vergleich zu Vergleichsbeispiel 6.

Die Beispiele 14, 15, 16 und 21 zeigen spezielle Ausführungsformen der Erfindung, bei denen die Komponenten der erfindungsgemässen Additiv-Zusammensetzung im gewichtsmässigen Verhältnis von MXD-Polyamid : Polyamid-co-Polycarbonat : Calciumphosphonat = 100 : 20 : 4 zueinander stehen.

Basierend auf den Ergebnissen der Tests wird eine Additiv-Zusammensetzung zum Beimischen zu Polyester oder Polycarbonat vorgeschlagen, die dadurch gekennzeichnet ist, dass sie zumindest ein MXD-Polyamid und ein Copolymer Polyamid-co-Polycarbonat umfasst, wobei sich die Additiv-Komponenten zu 100 Gew.-% der Additiv-Zusammensetzung summieren.

## Patentansprüche

1. Additiv-Zusammensetzung zum Beimischen zu Polyester oder Polycarbonat, **dadurch gekennzeichnet, dass** die Additiv-Zusammensetzung zumindest umfasst:
a) ein MXD-Polyamid, und
b) ein Copolymer Polyamid-co-Polycarbonat,
wobei sich die Additiv-Komponenten zu 100 Gew.-% der Additiv-Zusammensetzung summieren.

2. Additiv-Zusammensetzung nach Anspruch 1, **dadurch gekennzeichnet, dass** der Anteil des MXD-Polyamides an der Additiv-Zusammensetzung 65 bis 91 Gew.-% beträgt.

3. Additiv-Zusammensetzung nach Anspruch 1 oder 2, **dadurch gekennzeichnet, dass** das MXD-Polyamid in der Additiv-Zusammensetzung MXD6/MXDZ ist, wobei Z eine aromatische Dicarbonsäure ist.

4. Additiv-Zusammensetzung nach einem der vorhergehenden Ansprüche, **dadurch gekennzeichnet, dass** die aromatische Dicarbonsäure ausgewählt ist aus der Gruppe bestehend aus Isophthalsäure, Terephthalsäure, Naphthalindicarbonsäure und Mischungen davon.

5. Additiv-Zusammensetzung nach einem der Ansprüche 3 oder 4, **dadurch gekennzeichnet, dass** die aromatische Dicarbonsäure in Mengen von 0 bis 8 Mol-%, bevorzugt in Mengen von 1 bis 7 Mol-%, besonders bevorzugt in Mengen von 2 bis 4 Mol-%, im MXD-Polyamid enthalten ist.

6. Additiv-Zusammensetzung nach einem der vorhergehenden Ansprüche, **dadurch gekennzeichnet, dass** die Additiv-Zusammensetzung ein Metallphosphonat enthält, wobei der Anteil des Metallphosphonats in der Additiv-Zusammensetzung 0 bis 8 Gew.-%, bevorzugt 0.1 - 6 Gew.-%, besonders bevorzugt 0.5 - 4 Gew.-% beträgt.

7. Additiv-Zusammensetzung nach Anspruch 4, **dadurch gekennzeichnet, dass** das Metall des Metallphosphonats ausgewählt ist aus der Gruppe bestehend aus Natrium, Kalium, Magnesium, Calcium, Aluminium, Kobalt und Zink.

8. Additiv-Zusammensetzung nach Anspruch 4, **dadurch gekennzeichnet, dass** das Metallphosphonat in der Additiv-Zusammensetzung Calcium-diethyl-bis[[3,5-bis(1-dimethylethyl)-4-hydroxyphenyl]methyl]phosphonat ist.

9. Additiv-Zusammensetzung nach einem der vorhergehenden Ansprüche, **dadurch gekennzeichnet, dass** das der Anteil des Copolymer Polyamid-co-Polycarbonats an der Additiv-Zusammensetzung 9 bis 24 Gew.-%, bevorzugt 9 - 21 Gew.-%, besonders bevorzugt 9 - 17 Gew.-% beträgt.

10. Additiv-Zusammensetzung nach einem der vorhergehenden Ansprüche, **dadurch gekennzeichnet, dass** die Additiv-Zusammensetzung weitere Zusatzstoffe enthält, welche ausgewählt sind aus einer Gruppe, die aus Hitzestabilisatoren, Lichtstabilisatoren, UV-Stabilisatoren, UV-Absorbern, UV-Blockern, Antioxidantien, Nukleierungsmitteln, Kristallisationsbeschleunigern, Kristallisationsverzögeren, Entformungsmitteln, Gleitmitteln, Pigmenten, Farbstoffen, Kobaltverbindungen, Antiblockmitteln, optischen Aufhellern, natürlichen Schichtsilikaten, synthetischen Schichtsilikaten und Polyamid 6I/6T besteht.

11. Additiv-Zusammensetzung nach Anspruch 10, **dadurch gekennzeichnet, dass** die weiteren Zusatzstoffe der Additiv-Zusammensetzung in Form von einem oder mehreren Masterbatches mit einem Träger zugegeben sind, wobei der Träger ausgewählt ist aus einer Gruppe, die aus Polyamid, Polyester und Polycarbonat besteht und vorzugsweise Polyamid ist.

12. Thermoplastische Formmasse mit einer Additiv-Zusammensetzung nach einem der vorhergehenden Ansprüche, **dadurch gekennzeichnet, dass** die Additiv-Zusammensetzung dem Polyester oder Polycarbonat in Mengen von 1 bis 13 Gew.-%, bevorzugt in Mengen von 1 bis 10 Gew.-%, besonders bevorzugt in Mengen von 2 bis 8 Gew.-% und speziell bevorzugt in Mengen von 3 bis 6.5 Gew.-% bezogen auf die gesamte thermoplastische Formmasse zugesetzt ist.

13. Thermoplastische Formmasse nach Anspruch 12, **dadurch gekennzeichnet, dass** die Additiv-Zusammensetzung dem Polyester oder Polycarbonat als Einzelkomponenten, als Dryblend oder mittels Extrusion beigemischt ist.

14. Thermoplastische Formmasse nach Anspruch 12 oder 13, **dadurch gekennzeichnet, dass** der Polyester Polyethylenterephthalat (PET) oder Polybutylenterephthalat (PBT) ist.

15. Verwendung der Additiv-Zusammensetzung nach einem der Ansprüche 1 bis 11 zum Herstellen einer thermoplastischen Formmasse basierend auf Polyester oder Polycarbonat.

16. Verwendung der thermoplastischen Formmasse nach einem der Ansprüche 12 bis 14 zur Herstellung ein- oder mehrschichtiger Formkörper.

17. Verfahren zum Herstellen einer thermoplastischen Formmasse nach Anspruch 12, **dadurch gekennzeichnet, dass** die Additiv-Zusammensetzung dem Polyester oder Polycarbonat in Form von Einzelkomponenten, eines Dryblends oder mittels Extrusion beigemischt wird.

## Claims

1. An additive composition for admixing to polyester or polycarbonate, **characterized in that** the additive composition at least comprises:
a) an MXD polyamide, and
b) a copolymer polyamide co-polycarbonate,
the additive components adding up to 100 wt.-% of the additive composition.

2. The additive composition according to Claim 1, **characterized in that** the proportion of the MXD polyamide in the additive composition is 65 to 91 wt.-%.

3. The additive composition according to Claim 1 or 2, **characterized in that** the MXD polyamide in the additive composition is MXD 6/MXDZ, Z being an aromatic dicarboxylic acid.

4. The additive composition according to one of the preceding claims, **characterized in that** the aromatic dicarboxylic acid is selected from the group consisting of isophthalic acid, terephthalic acid, naphthalene dicarboxylic acid, and mixtures thereof.

5. The additive composition according to one of the claims 3 or 4, **characterized in that** the aromatic dicarboxylic acid is contained in the MXD polyamide in quantities of 0 to 8 mol-%, preferably in quantities of 1 to 7 mol-%, particularly preferably in quantities of 2 to 4 mol-%.

6. The additive composition according to one of the preceding claims, **characterized in that** the additive composition contains a metal phosphonate, the proportion of the metal phosphonate in the additive composition being 0 to 8 wt.-%, preferably 0.1 - 6 wt.-%, particularly preferably 0.5 - 4 wt.-%.

7. The additive composition according to Claim 4, **characterized in that** the metal of the metal phosphonate is selected from the group consisting of sodium, potassium, magnesium, calcium, aluminum, cobalt, and zinc.

8. The additive composition according to Claim 4, **characterized in that** the metal phosphonate in the additive composition is calcium diethyl-bis[[3,5-bis(1-dimethylethyl)-4-hydroxyphenyl] methyl] phosphonate.

9. The additive composition according to one of the preceding claims, **characterized in that** the proportion of the copolymer polyamide co-polycarbonate in the additive composition is 9 to 24 wt.-%, preferably 9 - 21 wt.-%, particularly preferably 9 - 17 wt.-%.

10. The additive composition according to one of the preceding claims, **characterized in that** the additive composition contains further ingredients, which are selected from a group which consists of heat stabilizers, light stabilizers, UV stabilizers, UV absorbers, UV blockers, antioxidants, nucleation agents, crystallization accelerators, crystallization retarders, demolding agents, lubricants, pigments, colorants, cobalt compounds, antiblocking agents, optical brightening agents, natural layered silicates, synthetic layered silicates, and polyamide 6I/6T.

11. The additive composition according to Claim 10, **characterized in that** the further ingredients of the additive composition are added in the form of one or more master batches having a carrier, the carrier being selected from a group which consists of polyamide, polyester, and polycarbonate, and preferably being polyamide.

12. A thermoplastic molding compound having an additive composition according to one of the preceding claims, **characterized in that** the additive composition is added to the polyester or polycarbonate in quantities of 1 to 13 wt.-%, preferably in quantities of 1 to 10 wt.-%, particularly preferably in quantities of 2 to 8 wt.-%, and especially preferably in quantities of 3 to 6.5 wt.-%, in relation to the total thermoplastic molding compound.

13. The thermoplastic molding compound according to Claim 12, **characterized in that** the additive composition is admixed to the polyester or polycarbonate as single components, as a dry blend, or using extrusion.

14. The thermoplastic molding compound according to Claim 12 or 13, **characterized in that** the polyester is polyethylene terephthalate (PET) or polybutylene terephthalate (PBT).

15. A use of the additive composition according to one of Claims 1 to 11 for producing a thermoplastic molding compound based on polyester or polycarbonate.

16. A use of the thermoplastic molding compound according to one of Claims 12 to 14 for producing single-layer or multilayered molded bodies.

17. A method for producing a thermoplastic molding compound according to Claim 12, **characterized in that** the additive composition is admixed to the polyester or polycarbonate in the form of single components, a dry blend, or using extrusion.

## Revendications

1. Composition d'additif destinée à l'ajout au polyester ou au polycarbonate, **caractérisée en ce que** la composition d'additif comprend au moins :
a) un polyamide MXD, et
b) un copolymère polyamide-co-polycarbonate,
dans laquelle les composants d'additif s'additionnent jusqu'à 100 % en poids de la composition d'additif.

2. Composition d'additif selon la revendication 1, **caractérisée en ce que** la fraction du polyamide MXD dans la composition d'additif est comprise entre 65 et 91 % en poids.

3. Composition d'additif selon la revendication 1 ou 2, **caractérisée en ce que** le polyamide MXD dans la composition d'additif est MXD6/MXDZ, où Z est un acide dicarboxylique aromatique.

4. Composition d'additif selon l'une des revendications précédentes, **caractérisée en ce que** l'acide dicarboxylique aromatique est sélectionné dans le groupe composé de l'acide isophtalique, de l'acide téréphtalique, de l'acide naphtalène-dicarboxylique, et de mélanges de ceux-ci.

5. Composition d'additif selon l'une des revendications 3 ou 4, **caractérisée en ce que** l'acide dicarboxylique aromatique est présent dans le polyamide MXD dans des quantités comprises entre 0 et 8 % en mole, de préférence dans des quantités comprises entre 1 et 7 % en mole, de façon particulièrement préférée dans des quantités comprises entre 2 et 4 % en mole.

6. Composition d'additif selon l'une des revendications précédentes, **caractérisée en ce que** la composition d'additif contient un phosphonate métallique, la fraction du phosphonate métallique dans la composition d'additif étant comprise entre 0 et 8 % en poids, de préférence entre 0,1 et 6 % en poids, de façon particulièrement préférée entre 0,5 et 4 % en poids.

7. Composition d'additif selon la revendication 4, **caractérisée en ce que** le métal du phosphonate métallique est sélectionné dans le groupe composé du sodium, du potassium, du magnésium, du calcium, de l'aluminium, du cobalt et du zinc.

8. Composition d'additif selon la revendication 4, **caractérisée en ce que** le phosphonate métallique dans la composition d'additif est le diéthyl-bis[[3,5-bis(1-diméthyléthyl)-4-hydroxyphényl]méthyl]phosphonate de calcium.

9. Composition d'additif selon l'une des revendications précédentes, **caractérisée en ce que** la fraction du copolymère polyamide-co-polycarbonate dans la composition d'additif est comprise entre 9 et 24 % en poids, de préférence entre 9 et 21 % en poids, de façon particulièrement préférée entre 9 et 17 % en poids.

10. Composition d'additif selon l'une des revendications précédentes, **caractérisée en ce que** la composition d'additif contient d'autres additifs, qui sont sélectionnés dans un groupe qui se compose d'agents de stabilisation de la chaleur, d'agents de stabilisation de la lumière, d'agents de stabilisation des UV, d'absorbeurs d'UV, de bloqueurs d'UV, d'antioxydants, d'agents de nucléation, d'accélérateurs de cristallisation, de retardateurs de cristallisation, d'agents de démoulage, d'agents lubrifiants, de pigments, de colorants, de composés au cobalt, d'antibloquants, d'azurants optiques, de phyllosillicates naturels, de phyllosilicates synthétiques et de polyamide 6I/6T.

11. Composition d'additif selon la revendication 10, **caractérisée en ce que** les autres additifs de la composition d'additif sont ajoutés sous la forme d'un ou de plusieurs mélanges-maître avec un support, le support étant sélectionné dans un groupe composé de polyamide, de polyester et de polycarbonate, et étant de préférence un polyamide.

12. Matière thermoplastique de moulage comportant une composition d'additif selon l'une des revendications précédentes, **caractérisée en ce que** la composition d'additif est ajoutée au polyester ou au polycarbonate dans des quantités comprises entre 1 et 13 % en poids, de préférence dans des quantités comprises entre 1 et 10 % en poids, de façon particulièrement préférée dans des quantités comprises entre 2 et 8 % en poids, et de façon spécialement préférée dans des quantités comprises entre 3 et 6,5 % en poids, sur la base de la matière thermoplastique de moulage totale.

13. Matière thermoplastique de moulage selon la revendication 12, **caractérisée en ce que** la composition d'additif est ajoutée au polyester ou au polycarbonate en tant que composants individuels, en tant que mélange sec ou au moyen d'une extrusion.

14. Matière thermoplastique de moulage selon la revendication 12 ou 13, **caractérisée en ce que** le polyester est du téréphtalate de polyéthylène (PET) ou du téréphtalate de polybutylène (PBT).

15. Utilisation d'une composition d'additif selon l'une des revendications 1 à 11 pour fabriquer une matière thermoplastique de moulage à base de polyester ou de polycarbonate.

16. Utilisation de la matière thermoplastique de moulage selon l'une des revendications 12 à 14 pour fabriquer un corps moulé à une ou plusieurs couches.

17. Procédé de fabrication d'une matière thermoplastique de moulage selon la revendication 12, **caractérisé en ce que** la composition d'additif est ajoutée au polyester ou au polycarbonate sous la forme de composants individuels, d'un mélange sec ou au moyen d'une extrusion.
